# FASCICULE DE BREVET EUROPEEN

(11) **EP 1 333 218 B1**
(45) Date de publication et mention de la délivrance du brevet: **22.06.2005**
(21) Numéro de dépôt: 03356015.2
(22) Date de dépôt: 03.02.2003
(51) Int. Cl.: F16L 37/084

(54) **Raccord rapide pour la jonction amovible de deux canalisations**
Schnellkupplung für die lösbare Verbindung zweier Rohrleitungen
Quick acting coupling for the disconnectable connection of two pipelines

(30) Priorité: 04.02.2002 FR 0201283
(43) Date de publication de la demande: 06.08.2003
(73) Titulaire: STÄUBLI FAVERGES, 74210 Faverges (FR)
(72) Inventeur: Lacroix, Jean-Jacques, 74330 Lovagny (FR)
(74) Mandataire: Myon, Gérard

(56) Documents cités:
- FR-A- 1 503 989
- FR-A- 2 514 855

## Description

L'invention a trait à un raccord rapide pour la jonction amovible de deux canalisations parcourues par un fluide sous pression.

Par le brevet FR-2 514 855, on connaît un raccord rapide qui comprend deux éléments mâle et femelle propres à s'emmancher axialement en provoquant l'ouverture d'un clapet monté dans le corps de l'élément femelle, ce corps étant équipé d'un verrou chargé, monté à coulissement dans ce corps et percé d'une ouverture centrale pour l'emmanchement de l'élément mâle. La paroi de l'ouverture du verrou présente trois dents décalées les unes par rapport aux autres le long d'un axe médian de cette ouverture, alors que l'élément mâle est pourvu d'un épaulement apte à reposer sélectivement contre l'une de ces dents. Le mouvement de déverrouillage de ce raccord connu a lieu en deux étapes correspondant respectivement à l'appui de l'épaulement de l'élément mâle sur la dent intermédiaire et sur la dent la plus proche du débouché de l'élément femelle. Lorsque l'élément mâle repose par son épaulement contre la dent la plus proche du débouché, l'air contenu dans le conduit relié à l'élément mâle peut être chassé à l'extérieur, sans risque trop important d'arrachement de l'élément mâle ou d'un mouvement de fouet de la canalisation associée.

Cet agencement classique donne satisfaction sur le plan de la robustesse et de la fiabilité.

Cependant, lorsque l'élément mâle est en appui par son épaulement contre la dent intermédiaire, il exerce sur celle-ci un effort qui dépend de la pression du fluide présent dans la canalisation reliée à l'élément mâle. Cet effort induit des frottements qui s'opposent au coulissement du verrou dans le corps de l'élément femelle. Pour vaincre ces efforts de frottement, il est nécessaire d'utiliser un ressort puissant qui charge élastiquement le verrou vers une position de dégagement de la dent intermédiaire. Ceci peut s'avérer gênant lors de l'accouplement du raccord car l'effort généré par ce ressort doit être vaincu pour permettre l'introduction de l'élément mâle dans l'élément femelle.

En d'autres termes, un raccord du type précité devient difficile à manoeuvrer lorsqu'il est utilisé avec un fluide à pression relativement importante. Or, un tel raccord doit pouvoir être utilisé pour des réseaux de fluide à 6 ou à 10 bars, voire à 25 bars, auquel cas il est effectivement délicat à manoeuvrer manuellement.

En pratique, il convient de ne pas modifier la géométrie de l'élément embout mâle qui est standardisée.

La présente invention vise à proposer un raccord rapide qui peut être manoeuvré aisément, y compris lorsque la pression du fluide est relativement importante, et qui comprend un embout mâle standard.

Dans cet esprit, l'invention concerne un raccord du type précité qui comprend des moyens de mise en communication de la canalisation aval avec l'atmosphère ambiante lorsque l'élément mâle repose par son épaulement contre la dent intermédiaire.

Grâce à l'invention, la canalisation aval peut être purgée du fluide qu'elle contient, alors que l'embout mâle est en appui sur la dent intermédiaire, de telle sorte que, au terme de cette opération de purge, la pression régnant dans la canalisation aval est sensiblement égale à la pression ambiante et que l'épaulement n'exerce pas d'effort important sur la dent intermédiaire, ce qui permet une manoeuvre aisée du verrou.

Selon des aspects avantageux mais non obligatoires de l'invention, ce raccord incorpore une ou plusieurs des caractéristiques suivantes :
- Les moyens de communication précités comprennent au moins un orifice formé dans le corps de l'élément femelle, en aval du clapet. Cet orifice peut avantageusement être obturé par l'élément mâle lorsque celui-ci repose par son épaulement contre la dent la plus éloignée du débouché d'un conduit central de l'élément femelle. En d'autres termes, cet orifice est fermé lorsque le raccord est en configuration passante. On peut, en outre, prévoir que cet orifice s'étend selon une direction globalement radiale par rapport à l'axe d'emmanchement des éléments mâles et femelles.
- Les moyens de mise en communication sont disposés dans une zone du corps de l'élément femelle distincte de la partie dans laquelle coulisse le verrou. Grâce à cet aspect de l'invention, le fluide provenant de la canalisation aval ne risque pas de perturber le coulissement du verrou.
- Les moyens de mise en communication sont disposés en amont de la partie du corps de l'élément femelle dans laquelle coulisse le verrou.
- L'élément femelle est équipé de moyens aptes à assurer l'étanchéité de la liaison entre les éléments mâle et femelle, alors que, lorsqu'il repose contre la dent intermédiaire, l'embout mâle est dégagé par rapport aux moyens d'étanchéité. Ainsi, les moyens d'étanchéité ne s'opposent pas à la purge de la canalisation aval.

L'invention sera mieux comprise et d'autres avantages de celle-ci apparaîtront plus clairement à la lumière de la description qui va suivre d'un mode de réalisation d'un raccord rapide conforme à son principe, donnée uniquement à titre d'exemple et faite en référence aux dessins annexés dans lesquels :
- la figure 1 est une coupe axiale d'un raccord rapide conforme à la présente invention, les éléments mâles et femelles étant représentés en position passante et verrouillée ;
- la figure 2 est une coupe analogue à la figure 1, lors d'une première étape d'ouverture du raccord ;
- la figure 3 est une coupe analogue à la figure 1, lors d'une seconde étape d'ouverture du raccord et
- la figure 4 est une coupe analogue à la figure 1, lorsque les éléments mâles et femelles sont découplés.

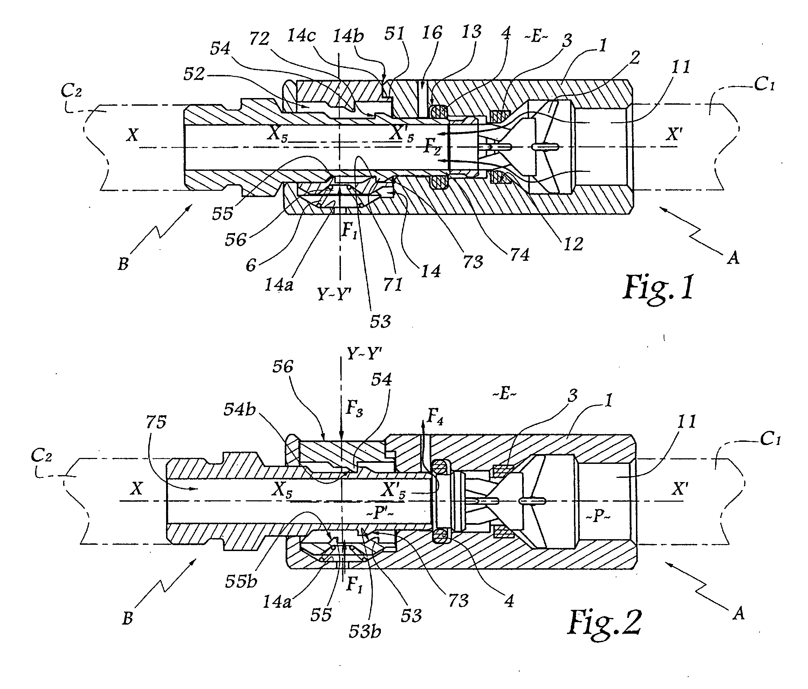

Le raccord représenté aux figures 1 à 4 comprend un élément femelle A et un élément ou embout mâle B raccordés respectivement à une canalisation amont C₁ et à une canalisation aval C₂. La canalisation amont C₁ est elle-même raccordée à une source de fluide sous pression non représentée.

Le corps 1 de l'élément femelle est de forme externe globalement cylindrique et circulaire, centré sur un axe X-X' qui est également l'axe longitudinal d'un conduit 11, interne au corps 1 et dans lequel est disposé un clapet 2 mobile selon l'axe X-X'. Le corps 1 est également équipé d'un joint 3 formant siège pour le clapet et disposé à l'intérieur d'une gorge 12 ménagée dans la paroi du conduit 11.

Le corps 1 forme une seconde gorge 13 de réception d'un joint torique 4.

Le corps 1 est également pourvu d'un logement cylindrique 14 s'étendant globalement dans la direction d'un axe Y-Y' perpendiculaire à l'axe X-X'.

A l'intérieur du logement 14 est monté, à coulissement, un verrou 5 sur lequel un ressort 6 exerce un effort élastique F₁ dirigé à l'opposé du fond 14a du logement 14, c'est-à-dire en direction de son débouché 14b. Le mouvement du verrou 5 sous l'effet de l'effort F₁ est limité par une saillie 51 venant en appui contre un épaulement 14c du logement 14.

Le ressort 6 est de forme tronconique et s'engage dans un renforcement 56 prévu sur la surface externe du verrou 5.

Le verrou 5 est pourvu d'une ouverture centrale 52 centrée sur un axe X₅-X'₅ parallèle à l'axe X-X'. L'ouverture 52 est bordée par trois dents.

Une première dent 53 forme une surface 53a globalement perpendiculaire à l'axe X₅-X'₅.

Une seconde dent 54 est ménagée du côté du verrou 5 opposé au ressort 6. Elle définit une surface 54a globalement perpendiculaire à l'axe X₅-X'₅.

Une troisième dent 55 est ménagée du côté du verrou 5 le plus proche du ressort 6 et forme une surface 55a globalement perpendiculaire à l'axe X₅-X'₅.

Les dents 53, 54 et 55 s'étendent à partir de la circonférence de l'ouverture 52 en direction de l'axe X₅-X'₅. La dent 53 est la plus éloignée du débouché 15 du conduit 11, alors que la dent 55 est la plus proche de ce débouché, la dent 54 étant intermédiaire entre les dents 53 et 55.

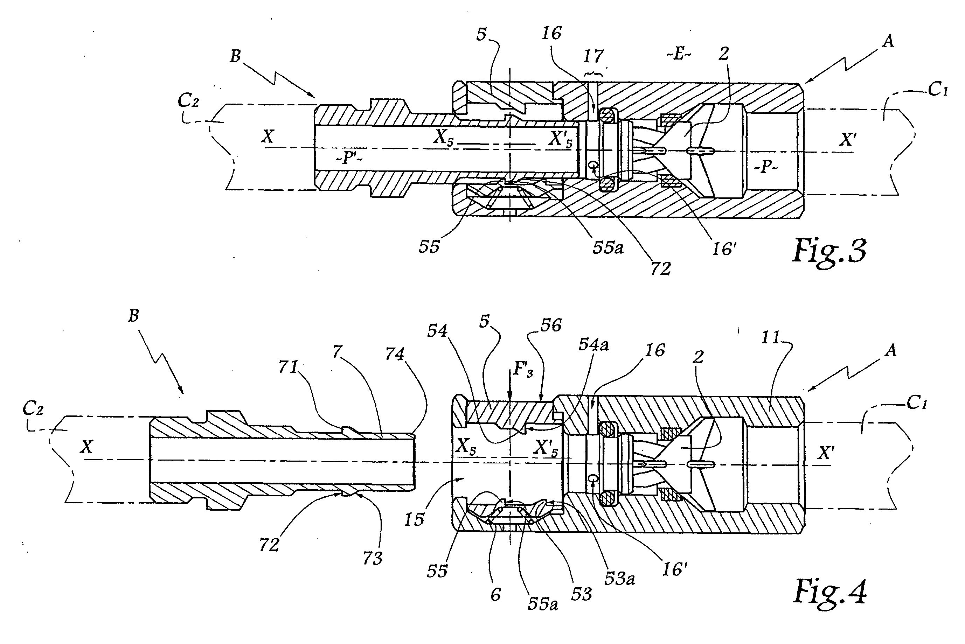

Un perçage 16 relie le conduit 11, en aval du clapet 2, avec l'atmosphère extérieure E. En pratique, et comme il ressort des figures 3 et 4, plusieurs perçages du type du perçage 16 peuvent être répartis autour de l'axe X-X', l'un de ces autres perçages apparaissant avec la référence 16'. Dans l'exemple représenté, le corps 1 est pourvu de trois perçages 16' répartis à 120° autour de l'axe X-X'.

L'embout mâle B comprend un corps 7 métallique pourvu d'une collerette 71 formant un épaulement 72 destiné à venir sélectivement en appui contre l'une des dents 53, 54 ou 55.

La collerette 71 est également pourvue d'une rampe inclinée 73 tronconique et convergente en direction de l'extrémité avant 74 du corps 7.

Le fonctionnement est le suivant :

Lors de l'emmanchement de l'élément B dans l'élément A, le fonctionnement est analogue à celui du raccord connu de FR-B-2 514 855.

Ceci permet d'atteindre la position de la figure 1 où l'écoulement du fluide est représenté par les flèches F₂. Dans cette position, l'embout B est en contact avec le joint 4, ce qui évite les fuites vers l'extérieur du raccord.

Dans la configuration de la figure 1, le corps 7 obture les perçages 16 et 16'.

A partir de cette position, et lorsqu'on souhaite désaccoupler les éléments A et B, il suffit d'exercer sur le verrou 5 un effort F₃ opposé à l'effort F₁, ce qui a pour effet de faire coulisser le verrou 5 dans le logement 14 en direction du fond 14a, ceci permettant de dégager la dent 53 par rapport à la collerette 71. Du fait de ce déplacement, la dent 54 vient se placer sur la trajectoire de dégagement de l'épaulement 72 qui vient alors en appui contre la surface 54a. Dans cette position représentée à la figure 2, l'extrémité avant 74 du corps 7 est dégagée par rapport au clapet 2 et au joint 4, alors que le perçage 16 est en communication avec le volume interne 75 du corps 7, ce qui permet un écoulement du fluide de la canalisation aval C₂ vers l'extérieur E, comme représenté par la flèche F₄. Le fluide se trouvant dans la canalisation amont C₁ demeure en amont du clapet 2 qui est en appui ferme contre son siège 3 sous l'effet de la pression P régnant dans la partie amont du conduit 11.

Grâce à l'écoulement F₄, la pression P' dans le volume 75 diminue rapidement, de telle sorte que l'effort de frottement entre l'épaulement 72 et la surface 54a diminue rapidement. Lorsque cet effort de pression atteint une valeur de seuil inférieure, cet effort est vaincu par l'effort F₁ et le ressort 6 repousse le verrou 5 vers la position de la figure 3 où l'embout 7 est efficacement retenu en position grâce à la coopération de la surface 55a et de l'épaulement 72.

Comme l'effort de frottement entre les surfaces 72 et 54a est relativement faible, l'effort F₁ qui doit être exercé par le ressort 6 pour ramener le verrou 5 vers la positon de la figure 3 n'est pas trop important, même si la pression P d'origine est relativement élevée. En effet, cet effort F₁ est indépendant de cette pression car il intervient après la purge de la canalisation à travers les perçages 16 et 16'.

La constante de raideur du ressort 6 peut ainsi être choisie avec une valeur relativement faible. Ainsi, l'utilisateur ne perçoit pas une résistance trop importante à l'effort F₃ qu'il doit exercer.

L'élément mâle B peut alors être définitivement libéré par un nouvel appui sur le verrou 5, tel que représenté par la flèche F'₃ à la figure 4, cet appui ayant pour effet d'effacer la dent 55 par rapport à la collerette 71. On peut alors retirer l'embout B comme représenté par la flèche F₅.

L'invention permet de réaliser la purge de la canalisation aval sur la dent intermédiaire et, ainsi, de limiter l'effort à vaincre pour passer de la position de la figure 2 à celle de la figure 3, c'est-à-dire de limiter la constante de raideur du ressort 6. Cette constante de raideur étant plus faible que dans les dispositifs connus, l'effort F₃ ou F'₃ à exercer pour enfoncer le verrou 5 dans le logement 14 peut être plus faible.

Le fait que les perçages 16 et 16' sont situés dans une zone 17 du corps 1 distincte du logement 14 permet d'éviter que l'essentiel de l'écoulement F₄ ne se propage vers l'intérieur du logement 14 et n'ait tendance à repousser le verrou 5 à l'encontre de l'effort F₃, ce qui pourrait entraîner que l'utilisateur augmente instinctivement la pression qu'il exerce avec le doigt sur la surface externe 56 du verrou ou bouton 5, et entraîne un déverrouillage complet du raccord avant la purge totale de la canalisation aval C₂.

L'invention permet donc d'avoir la certitude que la canalisation C₂ est efficacement purgée avant que l'élément mâle B ne soit retiré de l'élément femelle A.

## Revendications

1. Raccord rapide pour la jonction amovible de deux canalisations parcourues par un fluide sous pression, ledit raccord comprenant deux éléments mâle et femelle aptes à s'emmancher axialement l'un dans l'autre, le corps de l'élément femelle étant équipé d'un verrou chargé, monté à coulissement dans ledit corps et percé d'une ouverture centrale pour l'emmanchement dudit élément mâle, la paroi de l'ouverture du verrou étant équipée de trois dents décalées les unes par rapport aux autres le long d'un axe médian de ladite ouverture, alors que ledit élément mâle est pourvu d'un épaulement apte à reposer sélectivement contre l'une desdites dents, **caractérisé en ce que** ledit raccord comprend des moyens (16, 16') de mise en communication de la canalisation aval (C₂) avec l'atmosphère ambiante (E) lorsque ledit élément mâle (B) repose par son épaulement (72) contre la dent intermédiaire (54).

2. Raccord rapide selon la revendication 1, **caractérisé en ce que** lesdits moyens de communication comprennent au moins un orifice (16, 16') formé dans ledit corps (1) de l'élément femelle (A), en aval d'un clapet (2) mobile dans ledit corps.

3. Raccord rapide selon la revendication 2, **caractérisé en ce que** ledit orifice (16, 16') est apte à être obturé par ledit élément mâle (B) lorsque ledit élément mâle repose par son épaulement (72) contre la dent (53) la plus éloignée du débouché (15) dudit élément femelle (A).

4. Raccord rapide selon l'une des revendications 2 ou 3, **caractérisé en ce que** ledit orifice (16, 16') s'étend selon une direction globalement radiale par rapport à l'axe (X-X') d'emmanchement desdits éléments mâle (B) et femelle (A).

5. Raccord rapide selon l'une des revendications précédentes, **caractérisé en ce que** lesdits moyens de mise en communication (16) sont disposés dans une zone (17) dudit corps (1) de l'élément femelle (B) distincte de la partie (14) dans laquelle coulisse (F₁, F₃) ledit verrou (5).

6. Raccord rapide selon l'une des revendications précédentes, **caractérisé en ce que** lesdits moyens de mise en communication (16) sont disposés en amont de la partie (14) dudit corps (1) de l'élément femelle (B) dans laquelle coulisse (F₁, F₃) ledit verrou (5).

7. Raccord selon l'une des revendications précédentes, **caractérisé en ce que** ledit élément femelle (A) est équipé de moyens (4) aptes à assurer l'étanchéité de la liaison entre les éléments mâle et femelle (A, B) et **en ce que**, lorsque ledit élément mâle repose par son épaulement (72) contre la dent intermédiaire (54), il est dégagé par rapport auxdits moyens d'étanchéité.

## Patentansprüche

1. Schnellkupplung für die lösbare Verbindung zweier Leitungen, die von einem unter Druck stehenden Fluid durchströmt werden, wobei die Kupplung ein Einsteck- und ein Aufnahmeelement umfasst, die geeignet sind, axial ineinanderzugreifen, wobei der Körper des Aufnahmeelementes mit einem vorgespannten Bolzen ausgerüstet ist, der in gleitender Art und Weise in dem Körper montiert ist und von einer Mittelöffnung für das Einführen des Einsteckelementes durchbohrt ist, wobei die Wand der Öffnung des Bolzens mit drei Zähnen ausgerüstet sind, die entlang der Mittelachse der Öffnung zueinander versetzt sind, während das Einsteckelement mit einer Schulter versehen ist, die geeignet ist, sich selektiv gegen einen der Zähne abzustützen,
**dadurch gekennzeichnet,**
**dass** die Kupplung Mittel (16, 16') zum in Verbindung Bringen der stromabwärts gelegenen Leitung (C₂) mit der Umgebungsatmosphäre (E) umfasst, wenn das Einsteckelement (B) mit seiner Schulter (72) an dem zwischenliegenden Zahn (54) ruht.

2. Kupplung nach Anspruch 1, **dadurch gekennzeichnet, dass** die Mittel zum in Verbindung Bringen mindestens ein Loch (16, 16') umfassen, das in dem Körper (1) des Aufnahmeelementes (A) stromabwärts zu einem in dem Körper beweglichen Ventil (2) ausgebildet ist.

3. Kupplung nach Anspruch 2, **dadurch gekennzeichnet, dass** das Loch (16, 16') durch das Einsteckelement (B) verschlossen werden kann, wenn das Einsteckelement mit seiner Schulter (72) an dem am weitesten von der Mündung (15) des Aufnahmeelementes (A) entfernt liegenden Zahn (53) ruht.

4. Kupplung nach Anspruch 2 oder Anspruch 3, **dadurch gekennzeichnet, dass** das Loch (16, 16') sich in einer im Wesentlichen radialen Richtung in Bezug auf die Einsteckachse (X-X') des Einsteckelementes (B) und des Aufnahmeelementes (A) erstreckt.

5. Kupplung nach einem der vorhergehenden Ansprüche, **dadurch gekennzeichnet, dass** die Mittel zum in Verbindung Bringen (16) in einer Zone (17) des Körpers (1) des Aufnahmeelementes (A) angeordnet sind, die sich von dem Bereich (14), in dem der Bolzen (5) gleitet (F₁, F₃), unterscheidet.

6. Kupplung nach einem der vorhergehenden Ansprüche, **dadurch gekennzeichnet, dass** die Mittel zum in Verbindung Bringen (16) stromaufwärts zu dem Bereich (14) des Körpers (1) des Aufnahmeelementes (A) angeordnet sind, in dem der Bolzen (5) gleitet (F₁, F₃).

7. Kupplung nach einem der vorhergehenden Ansprüche, **dadurch gekennzeichnet, dass** das Aufnahmeelement (A) mit Mitteln (4) ausgerüstet sind, die geeignet sind, die Dichtigkeit der Verbindung zwischen dem Einsteck- und Aufnahmeelement (A, B) sicherzustellen und dass das Einsteckelement von den Dichtungsmitteln entfernt ist, wenn es mit seiner Schulter (72) an dem Zwischenzahn (54) ruht.

## Claims

1. A quick-acting coupling for the detachable connection of two pipes through which a fluid flows under pressure, the coupling comprising two male and female elements capable of shrink-fitting one inside the other, the body of the female element being equipped with a loaded bolt which is mounted slidingly in the body and is penetrated by a central aperture for the shrink-fitting of the male element, the wall of the bolt aperture being equipped with three teeth staggered with respect to one another along a median axis of the aperture, whereas the male element is provided with a shoulder capable of resting selectively against one of the teeth, **characterised in that** the coupling comprises means (16, 16') of bringing into communication the downstream pipe (C₂) with the surrounding atmosphere (E) when the male element (B) rests by its shoulder (72) against the intermediate tooth (54).

2. A quick-acting coupling according to claim 1, **characterised in that** the communication means comprise at least one orifice (16, 16') formed in the body (1) of the female element (A) downstream of a flap (2) movable in the said body.

3. A quick-acting coupling according to claim 2, **characterised in that** the orifice (16, 16') is capable of being sealed by the male element (B) when the male element is resting with its shoulder (72) against the tooth (53) most remote from the opening (15) of the female element (A).

4. A quick-acting coupling according to one of claims 2 or 3, **characterised in that** the orifice (16, 16') extends in a generally radial direction with respect to the axis (X-X') of shrink-fitting of the male (B) and female (A) elements.

5. A quick-acting coupling according to one of the preceding claims, **characterised in that** the means for bringing into communication (16) are disposed in a region (17) of the body (1) of the female element (A) distinct from the part (14) in which the bolt (5) slides (F₁, F₃).

6. A quick-acting coupling according to one of the preceding claims, **characterised in that** the means of bringing into communication (16) are disposed upstream of the part (14) of the body (1) of the female element (A) in which the bolt (5) slides (F₁, F₃).

7. A quick-acting coupling according to one of the preceding claims, **characterised in that** the female element (A) is equipped with means (4) capable of ensuring sealing-tightness of the link between the male and female elements (A, B) and **in that**, when the male element rests with its shoulder (72) against the intermediate tooth (54), it is free with respect to the sealing means.
